# EUROPEAN PATENT SPECIFICATION

(11) **EP 2 072 299 B1**
(45) Date of publication and mention of the grant of the patent: **21.03.2012**
(21) Application number: 08172415.5
(22) Date of filing: 19.12.2008
(51) Int. Cl.: B60H 1/32, B60H 1/00

(54) **Transport refrigeration apparatus**
Transportkühlanlage
Appareil de climatisation pour véhicule de transport

(30) Priority: 21.12.2007 JP 2007329958
(43) Date of publication of application: 24.06.2009
(73) Proprietor: Mitsubishi Heavy Industries, Ltd., Tokyo 108-8215 (JP)
(72) Inventor: Mizuma, Ikuo, 3-1, Asahi, Nishibiwajima-cho Kiyosu, Aichi-ken 452-8561 (JP)
(74) Representative: Intès, Didier Gérard André

(56) References cited:
- DE-U- 1 805 984
- GB-A- 743 888
- JP-A- 2001 324 252
- JP-A- 2003 240 411
- US-A- 3 323 625
- US-A- 6 047 942

## Description

### BACKGROUND OF THE INVENTION

### 1. FIELD OF THE INVENTION

The present invention relates to a sub-engine configuration, undermount-type transport refrigeration apparatus that is mounted on a refrigerated vehicle, cools the interior of a refrigerated compartment, and is provided with a dedicated engine.

### 2. DESCRIPTION OF RELATED ART

There are two configurations for the transport refrigeration apparatuses that are mounted on refrigerated vehicles and that cool the interior of a refrigerated compartment: a main engine configuration (direct-coupled type) that drives a refrigerant compressor by using the engine for vehicle travel, and a sub-engine configuration that is provided with a dedicated engine (sub-engine) that drives a refrigerant compressor. Generally, the sub-engine configuration refrigeration apparatus is most often used in large vehicles, and because a sub-engine is mounted therein, the dimensions of the condensing-side unit are comparatively large and the weight of the condensing-side unit is high. Thus, the undermount-type that is installed by being suspended under the chassis on either the left or right side of the vehicle along the longitudinal direction thereof is the predominant type.

In addition to the sub-engine and the refrigerant compressor, an electric motor, an alternator, a radiator for the sub-engine, and furthermore, devices that realize the refrigeration cycle are mounted on the condensing-side unit of the sub-engine configuration refrigeration apparatus. The electric motor drives the refrigerant compressor by receiving a supply of electric power from an external commercial power source while the sub-engine is stopped. The alternator is driven by the sub-engine or the electric motor and supplies direct current power (12 volts) to an evaporator unit, a controller, and a starter motor for the sub-engine and the like. Devices that realize the refrigeration cycle include, for example, a condenser fan, a condenser, a receiver, an accumulator, and an oil separator and the like.

In the condenser-side unit described above, as disclosed in Japanese Unexamined Patent Application, Publication No. 2001-324252 and Japanese Unexamined Patent Application, Publication No. 2003-240411, normally a sub-engine, an electric motor, a refrigerant compressor, and an alternator and the like are installed parallel to the width direction of the unit. These devices are structured so as to be linked together via pulleys and drive belts, and the refrigerant compressor and the alternator are driven by either the sub-engine or the electric motor. In addition, in order to ventilate air to the condenser, a structure is used in which an inlet and an outlet for air are provided in both sides (the front side and the back side) of the unit along the longitudinal direction of the vehicle.

In a conventional sub-engine configuration, undermount-type transport refrigeration apparatus, the sub-engine, electric motor, refrigerant compressor, alternator, and condenser fan and the like are installed in parallel. Thus, it is necessary to arrange the pulleys and drive belts that drive each of the devices at the near side (the front side) of the unit, and to arrange the condenser at the far side (the back side), or alternatively, it is necessary to arrange the condenser at the near side (the front side), and to arrange the pulleys and drive belts at the far side (the back side). Therefore, it is necessary to provide openings for ventilating the air at the near side (the front side) and at the far side (the back side) of the unit, and there is a problem in that noise, such as the sound of the engine and the sound of the fan rotation and the like, is directly emitted from the front opening toward the vehicle side.

In addition, because each of the devices is disposed in parallel in the width direction of the unit (i.e., the longitudinal direction of the vehicle), the dimension in the width direction, which is most important in relation to the unit size, becomes large, and this also influences the rigidity and vehicle installation characteristics of the unit. Furthermore, it is necessary to install a total of four drive belts, one each between the sub-engine and the electric motor, between the electric motor and the refrigerant compressor, between the refrigerant compressor and the condenser fan, and between the condenser fan and the alternator. Thus, there is a problem in that the probability of belt failure becomes higher as the number of belts increases.

DE 1 805 984 discloses a refrigeration apparatus according to the preamble of appending claim 1.

### BRIEF SUMMARY OF THE INVENTION

In consideration of such circumstances, it is an object of the present invention to provide a sub-engine configuration transport refrigeration apparatus that enables, for example, the realization of noise reduction, a reduction in the size of the unit, and the simplification and reduction of the cost of the drive train.

In order to solve the problems described above, the transport refrigeration apparatus of the present invention employs the following solutions.

Specifically, the transport refrigeration apparatus of the present invention, in which a dedicated engine that drives a refrigeration apparatus; an electric motor that is driven by an external power source; a refrigerant compressor, an alternator, and a condenser fan that are driven by the dedicated engine or the electric motor; and the condensing-side devices such as a condenser and an accumulator that realize the refrigeration cycle, are installed on a frame, and the frame is installed on one side of a refrigerated vehicle along the longitudinal direction of the vehicle, is characterized in that the condenser is arranged at one end side of the frame in the longitudinal direction of the vehicle, the condenser fan, the alternator, the refrigerant compressor, the electric motor, and the dedicated engine are disposed in such a way that the respective rotation axes are oriented in the longitudinal direction of the vehicle, and the ventilation direction with respect to the condenser is set to the longitudinal direction of the vehicle.

According to the present invention, the condenser is arranged at one end side of the frame in the longitudinal direction of the vehicle, and at a back side thereof, the condenser fan, the alternator, the refrigerant compressor, the electric motor, and the dedicated engine are disposed in such a way that the respective rotation axes are oriented in the longitudinal direction of the vehicle, and at the same time, the ventilation direction with respect to the condenser is set to the longitudinal direction of the vehicle. Thus, it is possible to ventilate the condenser by using a process in which air is introduced from one end side of the frame, is distributed without modification in the longitudinal direction, and is discharged from the other end side. It thereby becomes unnecessary to provide ventilation openings in both side surfaces of the frame, and it is possible to reduce significantly the noise emission toward the vehicle side. In addition, because air can be introduced by using ram pressure while the vehicle is traveling, it is possible to increase the condensing performance of the condenser, and simultaneously, it is possible to reduce the power of the condenser fan. Furthermore, by disposing the condenser fan, the alternator, the refrigerant compressor, the electric motor, and the dedicated engine in such a way that the respective rotation axes of these devices are oriented in the longitudinal direction of the vehicle, it is possible to directly couple at least the condenser fan and the electric motor, it becomes unnecessary to use a separate motor for setting the ventilation direction in the longitudinal direction of the vehicle, and it is possible to realize a simplification of the drive train and the reduction in the size of the unit and the like. Moreover, the condenser may be arranged either on the front end side or the back end side of the frame in the longitudinal direction of the vehicle.

The transport refrigeration apparatus of the present invention may use a structure in which, in the transport refrigeration apparatus described above, the condenser fan, the electric motor, and the dedicated engine are disposed on the same rotation axis.

According to this structure, because the condenser fan, the electric motor, and the dedicated motor are disposed on the same rotation axis, it is possible to transfer the power of the electric motor or the dedicated engine directly to the condenser fan by directly coupling them. Thus, it is possible to eliminate the pulleys and drive belts that are used for power transfer between these devices. Therefore, it is possible to realize a significant simplification and a reduction in the cost of the drive train, along with a reduction in the size of the unit.

The transport refrigeration apparatus of the present invention may use a structure in which, in any of the transport refrigeration apparatuses that have been described above, the refrigerant compressor and the alternator may be disposed around the periphery of the electric motor.

According to this structure, because the refrigerant compressor and the alternator are disposed around the periphery of the electric motor, among the dedicated engine and the electric motor, which are disposed on the same rotation axis, it is possible to dispose the refrigerant compressor and the alternator using the space around the electric motor, which has a small volume. Thus, it is possible to dispose the refrigerant compressor and the alternator of the driven system around the dedicated engine and the electric motor, which are the drive sources, and it is possible to assemble the entire structure compactly. Thus, in comparison to a refrigeration apparatus in which each of the devices is arranged in parallel in the longitudinal direction of the vehicle, it is possible to reduce the dimension of the unit in the longitudinal direction (width dimension), and it is possible to reduce the size of the unit and it is possible to make the unit highly rigid.

The transport refrigeration apparatus of the present invention may use a structure in which, in the transport refrigeration apparatus described above, the refrigerant compressor and the alternator are disposed above the electric motor.

According to this structure, because the refrigerant compressor and the alternator are disposed above the electric motor, among the dedicated engine and the electric motor that are disposed on the same rotation axis, it is possible to dispose the refrigerant compressor and the alternator by using the space that is formed above the electric motor, which has a small volume. Thus, the refrigerant compressor and the alternator of the driven system can be disposed around the dedicated engine and the electric motor, which are the drive sources, and it is possible to assemble the entire structure compactly. Thus, in comparison to a refrigeration apparatus in which each of the devices is arranged in parallel in the longitudinal direction of the vehicle, it is possible to reduce the dimension of the unit in the longitudinal direction (width dimension), it is possible to reduce the size of the unit, and it is possible to make the unit highly rigid.

The transport refrigeration apparatus of the present invention may use a structure in which, in any of the transport refrigeration apparatuses described above, a centrifugal clutch is provided between the output shaft of the dedicated engine and the motor shaft of the electric motor, and a drive belt is installed between the pulley of the centrifugal clutch and the pulleys that are respectively provided on the rotating shafts of the refrigerant compressor and the alternator.

According to this structure, because a drive belt is installed between the pulley for the centrifugal clutch, which is provided between the output shaft of the dedicated engine and the motor shaft of the electric motor, and the pulleys that are respectively provided on the rotating shafts of the refrigerant compressor and the alternator, it is possible to use one drive belt for power transfer. Thus, in comparison to a conventional refrigeration apparatus in which the dedicated engine, the electric motor, the refrigerant compressor, the alternator, and the condenser fan are arranged in parallel, it is possible to decrease the number of drive belts from four to one. Therefore, it is possible to reduce the probability of a belt failure to one-fourth that of a conventional refrigeration apparatus, and thereby it is possible to increase reliability. In addition, it is thereby possible to realize a significant simplification of the structure and a reduction in the cost of the drive train.

The transport refrigeration apparatus of the present invention may use a structure in which, in any of the transport refrigeration apparatuses that have been described above, an integrating bracket is provided around the output shaft of the dedicated engine, the electric motor is attached to the integrating bracket at the output shaft side of the integrating bracket, and the refrigerant compressor and the alternator are attached to the outer periphery of the integrating bracket and around the electric motor.

According to this structure, an integrating bracket is provided around the output shaft of the dedicated engine, the electric motor is attached to the integrating bracket at the output shaft side of the integrating bracket, and the refrigerant compressor and the alternator are attached to the outer periphery of the integrating bracket and around the electric motor, and thus the dedicated engine, the electric motor, the refrigerant compressor, and the alternator are integrated by the integrating bracket, and the respective installation positions are thereby secured. Thus, it is possible to simplify the alignment of the drive train that drives the refrigerant compressor and the alternator by using the dedicated engine and the electric motor, and it is possible to reduce the size of the frame in proportion to the size of each of the integrated devices, and it is possible to impart a high rigidity to the frame.

The transport refrigeration apparatus of the present invention may use a structure in which, in the transport refrigeration apparatus described above, the dedicated engine, the electric motor, the refrigerant compressor, and the alternator are integrated by the integrating bracket, and these are supported on the frame at a plurality of locations so as to be isolated from vibration.

According to this structure, the dedicated engine, the electric motor, the refrigerant compressor, and the alternator are integrated by the integrating bracket and these are supported on the frame at a plurality of locations so as to as to be isolated from vibration, and thus a base plate, on which these heavy devices would be mounted and supported on the frame so as to be isolated from vibration, becomes unnecessary. Thus, it is possible to reduce the unit weight by an amount that is equivalent to the weight of the base plate.

The transport refrigeration apparatus of the present invention may use a structure in which, in any of the transport refrigeration apparatuses described above, the accumulator is arranged below the refrigerant compressor.

According to this structure, because the accumulator is arranged below the refrigerant compressor, it is possible to retain liquefied coolant inside the accumulator in a cycle during which the operation is stopped. It is thereby possible to prevent the pooling of the liquid refrigerant in the refrigerant compressor and to prevent liquid compression during the operation startup.

According to the present invention, the condenser can be ventilated by using a process in which air is introduced from one end side of the frame, is distributed without modification in the longitudinal direction, and is discharged from the other end side. Thus, providing openings for ventilation on both side surfaces of the frame becomes unnecessary, and it is possible to reduce the noise emission toward vehicle side significantly. In addition, during vehicle travel, because air can be introduced by using ram pressure, it is possible to increase the condensation performance of the condenser, and at the same time, it is possible to reduce the power of the condenser fan. Furthermore, it is possible to directly couple at least the condenser fan and the electric motor by disposing the condenser fan, the alternator, the refrigerant compressor, and the electric motor and dedicated engine in such a way that the respective rotation axes of these devices are oriented in the longitudinal direction of the vehicle, it becomes unnecessary to use a separate motor in order to set the ventilation direction in the longitudinal direction of the vehicle, and it is possible to realize a simplification of the drive train and a reduction in the size of the unit.

### BRIEF DESCRIPTION OF THE SEVERAL VIEWS OF THE DRAWINGS

FIG. 1 is a perspective view of the transport refrigeration apparatus according to an embodiment of the present invention.
FIG. 2 is a plane equipment layout view that schematizes the configuration of the main devices of the transport refrigeration apparatus that is shown in FIG. 1.
FIG. 3 is a side equipment layout view that schematizes the configuration of the main devices of the transport refrigeration apparatus that is shown in FIG. 1.
FIG. 4 is a side view of the state in which the dedicated engine, the electric motor, the refrigerant compressor, and the alternator of the transport refrigeration apparatus that is shown in FIG. 1 have been modularized by the integrating bracket.
FIG. 5 is a side view that shows the installed state of the drive belt between the centrifugal clutch driven pulley and the pulleys of the refrigerant compressor and the alternator in the transport refrigeration apparatus that is shown in FIG. 1.

### DETAILED DESCRIPTION OF THE INVENTION

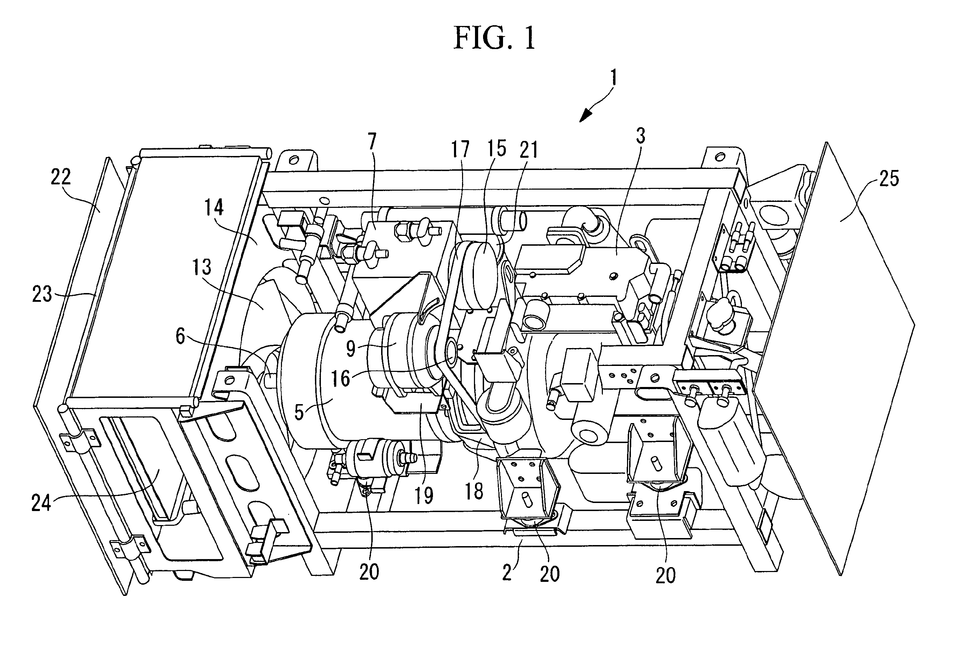

Below, an embodiment of the present invention will be explained with reference to FIG. 1 through FIG. 5.

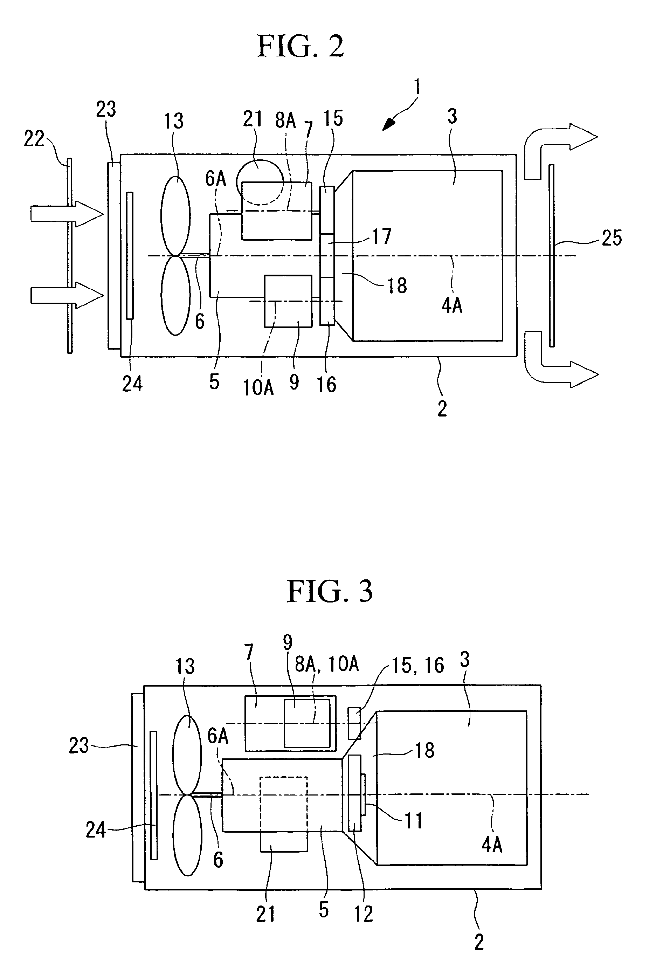

FIG. 1 shows a perspective view of the transport refrigeration apparatus 1 according to an embodiment of the present invention, and FIG. 2 and FIG. 3 respectively show a plan equipment layout view and a side equipment layout view in which the configuration of the main devices has been schematized.

The transport refrigeration apparatus 1 is provided with a frame 2, which consists of angle bars that have been assembled so as to form a rectangular shape. The periphery of the frame 2 is covered by installing exterior panels, but here, the state in which the exterior panels have been removed is illustrated. This frame 2 is structured such that, at one of either the left or right side of the refrigerated vehicle, the four corners thereof are installed by being suspended from the bottom portion of the chassis.

As shown in FIG. 1, the frame 2 has an elongated rectangular shape along the longitudinal direction of the vehicle, and the dimension in the length direction is referred to as the "width dimension", the dimension in the depth direction is referred to as the "depth dimension", and the dimension in the height direction is referred to as the "height dimension". In addition, the near side surface in the figure is referred to as the "front surface" (when mounted on a vehicle, the surface that faces toward the outside of the vehicle), the surface facing the inside is referred to as the "back surface", the surface facing toward the front side of the vehicle is referred to as the "front end surface", and the surface facing toward the back side of the vehicle is referred to as the "back end surface". In the central portion of the frame 2, a water-cooled sub-engine (the engine dedicated to the refrigerating apparatus) 3, an electric motor 5, which is driven by receiving a supply of power from an external commercial power source, a refrigerant compressor 7, which is driven by receiving power from either the sub-engine 3 or the electric motor 5, and an alternator 9, which is driven by receiving power from either the sub-engine 3 or the electric motor 5, are installed.

The water-cooled sub-engine 3 is disposed toward the back end side of the frame 2, the rotation axis 4A of the output shaft (not illustrated) is arranged along the longitudinal direction of the vehicle, and the output shaft projects toward the front. The electric motor 5 is disposed at the front side of this sub-engine 3. The rotation axis 6A of the motor shaft 6 of the electric motor 5 and the rotation axis 4A of the output shaft of the sub-engine 3 are arranged on the same axis, and the output shaft of the sub-engine 3 and the motor shaft 6 of the electric motor 5 are directly coupled by a unidirectional centrifugal clutch 11. This unidirectional centrifugal clutch 11 is structured such that when the speed of the sub-engine 3 becomes equal to or greater than a predetermined speed, power is transferred to the electric motor 5 and not transferred from the electric motor 5 side to the sub-engine 3 side. In addition, the unidirectional centrifugal clutch 11 is provided with a clutch pulley 12 on the driven side that is linked to the motor shaft 6 of the electric motor 5.

A condenser fan (propeller fan) 13 is directly coupled to the distal end of the motor shaft 6 of the electric motor 5, and a fan shroud 14 is installed so as to surround the condenser fan 13. According to such a structure, while the sub-engine 3 is activated, the condenser fan 13 is driven by the sub-engine 3 via the centrifugal clutch 11 and the electric motor 5 (which passively rotates because it is not being supplied with electricity), and in the case in which the sub-engine 3 is stopped and the electric motor 5 is activated, the condenser fan 13 is driven by the electric motor 5.

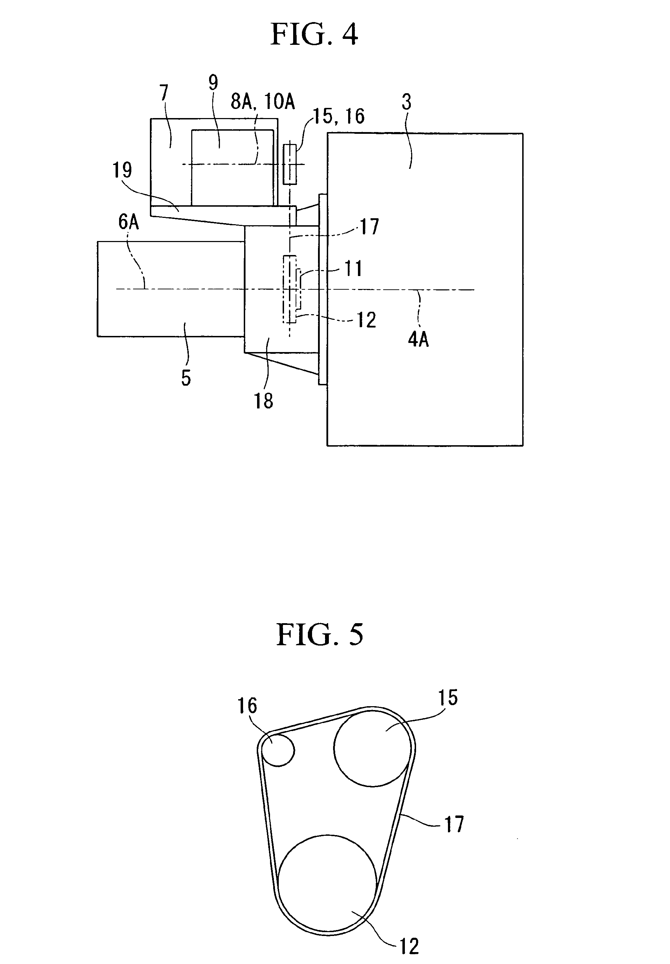

In addition, in the upper portion of the space around the electric motor 5, the refrigerant compressor 7 and the alternator 9 are arranged in parallel such that the respective rotation axes 8A and 10A are aligned in the longitudinal direction of the vehicle. The rotating shafts (not illustrated) of the refrigerant compressor 7 and the alternator 9 project toward the back side, and pulleys 15 and 16 are respectively provided on the distal ends thereof. As shown in FIG. 5, a drive belt (V belt) 17 is installed around the pulleys 15 and 16 and the clutch pulley 12, and while the sub-engine 3 is activated, the refrigerant compressor 7 and the alternator 9 are driven by the sub-engine 3 via the centrifugal clutch 11 (in this case, the electric motor 5 is passively rotating), and in the case in which the sub-engine 3 is stopped and the electric motor 5 is activated, the refrigerant compressor 7 and the alternator 9 are driven by the electric motor 5.

The refrigerant compressor 7 cooperates to realize the refrigeration cycle of the refrigeration apparatus, and although the configuration thereof is not limited in particular, preferably the refrigerant compressor 7 will be as small as possible and have as high a performance as possible. In the present embodiment, an open scroll-type compressor is used in which one end of the rotating shaft projects toward the outside of a housing. The alternator 9 is for supplying direct current power (12 volts) to an evaporator fan motor of an evaporator unit (not illustrated), which is installed inside the refrigerated compartment, the controller, and the starter motor for the sub-engine 3 and the like.

As shown in FIG. 4, the sub-engine 3, the electric motor 5, the refrigerant compressor 7, and the alternator 9, described above, are integrally joined by the integrating bracket 18. The integrating bracket 18 is provided on the side surface of the sub-engine 3 on the output shaft side, and joins the output shaft of the sub-engine 3, the centrifugal clutch 11, and the clutch pulley 12 so as to surround them. Specifically, a structure is formed in which the electric motor 5 is attached and integrally joined to the end surface of the integrating bracket 18 on the output shaft side, the integrating bracket 18 being joined to the side surface of the sub-engine 3, and also, the refrigerant compressor 7 and the alternator 9 are attached and integrally joined by the bracket 19 to the upper portion of the outer peripheral surface of the integrating bracket 18. Note that the refrigerant compressor 7 and the alternator 9 are disposed so as to project into the upper portion of the space around the electric motor 5, which has a smaller volume than the sub-engine 3.

In this manner, a structure is formed in which the sub-engine 3, the electric motor 5, the condenser fan 13, the refrigerant compressor 7, and the alternator 9 are arranged on the frame 2 in such a way that the respective rotation axes 4A, 6A, 8A, and 10A are oriented in the longitudinal direction, and the sub-engine 3, the motor 5, and the condenser fan 13 are arranged on the same axis and are directly coupled to each other. Furthermore, among these, the sub-engine 3, the electric motor 5, the refrigerant compressor 7, and the alternator 9 are integrally modularized by the integrating bracket 18, and in this state, they are directly supported on the frame 2 at a plurality of locations so as to be isolated from vibration by the vibration preventing rubber cushions 20 in the longitudinal direction.

In addition, in proximity to the refrigerant compressor 7, the condensing-side devices that realize the refrigeration cycle are mounted, these devices including, for example, an oil separator (not illustrated), an accumulator 21, and a receiver (not illustrated). The oil separator separates lubricating oil in the refrigerant gas that has been discharged from the refrigerant compressor 7 and returns the lubricating oil to the refrigerant compressor 7. The accumulator 21 separates the liquid component in the refrigerant gas that is drawn into the refrigerant coolant 7 and draws in only the gas component. The receiver retains the liquid refrigerant that has been condensed by the condenser and the like. As shown in FIG. 1 and FIG. 3, this accumulator 21 is disposed at a position that is below the refrigerant compressor 7, which is arranged in the space above the electric motor 7.

Furthermore, a heat exchange guard 22, which is provided with a plurality of ventilation openings, is installed at the most forward end of the frame 2, and a condenser 23 is installed behind the heat exchange guard 22 in a vertical direction. The condenser 23 is a rectangular parallel flow heat exchanger that condenses and liquefies the high temperature, high-pressure refrigerant gas that has been discharged from the refrigerant compressor 7 that cooperates to realize the refrigeration cycle. In addition, a radiator 24, which cools the cooling water for the cooling water-type engine 3, is installed in a vertical direction in back of this condenser 23, and the coolant water from the sub-engine 3 is circulated through the radiator 24. The condenser fan 13 described above is provided in back of and opposed to the condenser 23 and the radiator 24.

According to this structure, air that is introduced because of ram pressure while the vehicle is traveling and air that is drawn in by the condenser fan 13 are ventilated in the longitudinal direction with respect to the condenser 23 and the radiator 24, which are provided at the most forward end side of the frame 2, and heat exchange is carried out between the refrigerant and the coolant water that flow respectively through the condenser 23 and the radiator 24. In addition, after this air has been distributed and has thereby cooled the areas around the electric motor 5, the refrigerant compressor 7, the alternator 9, and the sub-engine 3, this air flows out from the back end of the frame 2 and is diffused omnidirectionally due to impacting the diffuser plate 25 that is provided at the back end of the frame 2, and released.

Due to the structure that has been explained above, the following operational effects are exhibited by the present embodiment.

The sub-engine configuration transport refrigeration apparatus 1 is driven by a sub-engine (dedicated engine) while the vehicle is traveling. When the sub-engine 3 is activated and the speed thereof becomes equal to or greater than a predetermined speed, the centrifugal clutch 11 is engaged, and the power of the sub-engine 3 is transferred to the clutch pulley 12 and then to the motor shaft 6. In this case, the motor shaft 6 rotates passively because the electric motor 5 is not being supplied with electricity, and the power from the sub-engine 3 is transferred without modification to the condenser fan 13 that is directly coupled to the distal end of the sub-engine 3 via the motor shaft 6. The condenser fan 13 is thereby rotated, air is drawn in through the heat exchange guard 22, and the condenser 23 and the radiator 24 are ventilated.

In addition, when the clutch pulley 12 is rotated, the power of the sub-engine 3 is transferred to the pulleys 15 and 16 via the drive belt 17, and the refrigerant compressor 7 and the alternator 9 are thereby driven. The direct current electric power that is generated due to the alternator 9 being rotatably driven serves as the power source for an evaporator unit that is installed inside the refrigerated compartment (not illustrated), the controller, and the starter motor for the sub-engine 3 and the like, the evaporator fan motor for the evaporator unit is driven, and the air inside the refrigerated compartment is thereby ventilated to the evaporator.

Similarly, when the refrigerant compressor 7 is rotatably driven, the low-pressure refrigerant gas from the refrigeration cycle is drawn in, compressed to a high-temperature, high-pressure state, and then discharged to the refrigeration cycle. This refrigerant gas flows into the condenser 23 after the lubricating oil in the gas has been separated by the oil separator. The refrigerant gas that has flowed into the condenser 23 is cooled by heat exchange with the air that is ventilated due to the rotation of the condenser fan 13, and the refrigerant gas is thereby condensed and liquefied. After this refrigerant has been retained in the receiver, the refrigerant passes through an expansion valve and is supplied to the evaporator of the evaporator unit. The refrigerant vaporizes to cool the air by heat exchange with the air inside of the refrigerated compartment that is circulating through the evaporator. The interior of the refrigerated compartment is cooled to a predetermined temperature by this cooling air. The vaporized refrigerant is drawn into the refrigerant compressor 7 again after passing through the accumulator 21, and the refrigeration operation continues by repeating a cycle that is identical to the one described below.

In the case in which the vehicle is stopped due to, for example, resting at night, the sub-engine 3 is stopped. During this interval, the refrigeration apparatus 1 is switched to motor driven operation by connecting the electric motor 5 to an external commercial power source. While the refrigeration apparatus 1 is operating due to activating the electric motor 5 using a commercial power source, the electric motor 5 and the sub-engine 3 are disengaged by the centrifugal clutch 11, and the power transfer from the electric motor 5 side to the sub-engine 3 side is interrupted. In this case, the power of the electric motor 5 is transferred to the condenser fan 13 via the motor shaft 6, is further transferred to the clutch pulley 12, and then transferred to the refrigerant compressor 7 and the alternator 9 via the drive belt 17 and the pulleys 15 and 16. The condenser fan 13, the refrigerant compressor 7, and the alternator 9 are thereby rotatably driven. Thus, it is possible to carry out a cooling operation similar to that above.

During the cooling operation, air that has passed through the heat exchange guard 22 from the most forward side of the refrigeration apparatus 1 is introduced into the refrigeration apparatus 1 to ventilate the condenser 23 and the radiator 24 in the longitudinal direction. Subsequently, the air is distributed toward the back around the electric motor 5, the refrigerant compressor 7, the alternator 9, and the sub-engine 3 and the like inside the refrigeration apparatus 1. The air is discharged from the back end surface of the refrigeration apparatus 1, is diffused omnidirectionally due to impacting with the diffuser plate 25, and is released. Thus, it becomes unnecessary to provide openings for ventilating air in the front surface and the back surface and the like of the refrigeration apparatus 1, and the emission of the rotation noise of the condenser fan 13 and the engine noise of the sub-engine 3 toward the vehicle side is eliminated. Therefore, it is possible to significantly reduce the noise emission toward the vehicle side.

In addition, air can be introduced by using ram pressure resulting from the vehicle travel because a structure is used in which air is introduced from the front end surface of the refrigeration apparatus 1 and is ventilated in the longitudinal direction, and thus it is possible to increase the condensing performance of the condenser 23, it is possible to reduce the power of the condenser fan 13, and it is possible to realize energy conservation.

Furthermore, the sub-engine 3, the electric motor 5, the refrigerant compressor 7, the alternator 9, and the condenser fan 13 are disposed in such a way that that their respective rotation axes 4A, 6A, 8A, and 10A are oriented in the longitudinal direction, and thus, in comparison to a refrigeration apparatus in which these are disposed in parallel rows, it is possible to shorten the width dimension of the refrigeration apparatus 1. In particular, the refrigerant compressor 7 and the alternator 9 are disposed in such a way that the respective rotation axes of the refrigerant compressor 7 and the alternator 9 are oriented in the longitudinal direction of the vehicle by using the space around, or specifically, the space above, the electric motor 5, which has a smaller volume than the sub-engine 3, and thus it is possible to shorten the width dimension significantly, and it is possible to realize a reduction in the size of the refrigeration apparatus 1.

In addition, three devices, that is, the sub-engine 3, the electric motor 5, and the condenser fan 13, are disposed on the same axis and so as to be directly coupled, and thus it is possible to transfer the power of the sub-engine 3 and the electric motor 5 directly to the condenser fan 13. It is thereby possible to omit pulleys and drive belts for power transfer between these three devices. Therefore, it is possible to realize a significant simplification and a reduction in the cost of the drive train, and a reduction in the size of the refrigeration apparatus 1.

In particular, in the present embodiment, the sub-engine 3, the electric motor 5, and the condenser fan 13 are directly coupled, the refrigerant compressor 7 and the alternator 9 are arranged in the space above the electric motor 5, and it is possible to drive these components by installing one drive belt 17 between the clutch pulley 12 and the pulleys 15 and 16 to drive them. Thus, in comparison to a refrigeration apparatus in which these devices are disposed in parallel and connected by belts and pulleys, it is possible to reduce the number of belts from four to one, the probability of a belt failure is reduced to one-fourth compared to the conventional refrigeration apparatus, and it is possible to increase reliability. In addition, it is possible to simplify the structure of the drive train significantly, and it is possible to realize a reduction in the cost.

Furthermore, a structure is used in which the sub-engine 3, the electric motor 5, the refrigerant compressor 7, and the alternator 9 are integrally modularized by being joined by an integrating bracket 18, and thus it is possible to secure the installation positions of each of these devices. It is thereby possible to simplify the alignment of the drive train (the pulleys 12, 15, and 16, and the drive belt 17) that drives the refrigerant compressor 7 and the alternator 9 by using the sub-engine 3 and the electric motor 5. In addition, it is possible to reduce the size of the frame 2 in proportion to the size of each of the devices that have been integrated, and thus a high rigidity is imparted to the frame 2 itself, and it is possible to increase the durability.

In addition, a structure is used in which the sub-engine 3, the electric motor 5, the refrigerant compressor 7, and the alternator 9 are integrally modularized, and these are directly supported on the frame 2 at a plurality of locations so as to be isolated from vibration by vibration preventing rubber cushions 20, and thus it is possible to eliminate the base plate on which the heavy sub-engine 3, the electric motor 5, the refrigerant compressor 7, and the alternator 9 and the like are mounted and supporting these on the frame so as to be isolated from vibration. It is thereby possible to reduce the weight of the refrigeration apparatus 1 by an amount equivalent to the weight of the base plate.

In addition, a structure is used in which the refrigerant compressor 7 is disposed in the space above the electric motor 5, and the accumulator 21 is arranged at a position below the refrigerant compressor 7, and thus it is possible to retain the refrigerant, which has been liquefied in the refrigeration cycle while the operation is stopped, in the accumulator 21. The pooling of the liquid refrigerant in the refrigerant compressor 7 is thereby inhibited, and it is possible to increase reliability by preventing damage and the like to the refrigerant compressor 7 by suppressing liquid compression during start-up of the operation.

Furthermore, the condenser 13 is arranged perpendicular to the front end surface of the frame 2 and is ventilated in the longitudinal direction. Thus, the condition of debris on both the front and back surfaces of the condenser 13 can be easily confirmed from the outside, and cleaning can also be carried out easily. Therefore, it is possible to minimize loses in performance due to debris.

Note that the present invention is not limited to the invention according to the embodiment that has been described above, and suitable modifications are possible within a range that does not depart from the claims. For example, the compressor 7 and the alternator 9 are disposed in the space above the electric motor 5, but this is not so limited. They may be arranged in the space at the side thereof, and in particular, in the case in which the height dimension is limited, disposing them in the space at the side thereof is effective. In addition, the devices that are mounted on the frame 2 are not limited to the devices that have been explained in the embodiment described above, and naturally other auxiliary devices for the sub-engine and other devices that form the refrigeration apparatus may be included. Furthermore, in the embodiment that has been described above, a structure is used in which the condenser 23 and the radiator 24 are arranged at the front end side of the frame 2 in the longitudinal direction of the vehicle, and the other devices are disposed at the back side thereof. However, a structure may be used in which the condenser 23 and the radiator 24 are arranged at the front end side of the frame 2 in the longitudinal direction of the vehicle, and the other devices are disposed at the back side thereof (in this case, the front side in the longitudinal direction of the vehicle). This is because in the case in which the same unit is mounted on the right side of the vehicle and the case in which the same unit is mounted on the left side of the vehicle, the mounting configuration is reversed back to front, and naturally such a mode is included in the present invention.

## Claims

1. A transport refrigeration apparatus (1), in which a dedicated engine (3) that drives the refrigeration apparatus, an electric motor (5) that is driven by an external power source, a refrigerant compressor (7), and condenser fan (13) that are driven by either one of the dedicated engine and the electric motor, and condensing-side devices such as a condenser (23) and an accumulator (21) that cooperate to form a refrigeration cycle, are installed on a frame (2), and the frame is installed along the longitudinal direction of the vehicle on one side of a refrigerated vehicle, wherein
the condenser (23) is arranged at one end side of the frame (2) in the longitudinal direction of the vehicle, the condenser fan (13), the refrigerant compressor (7), the electric motor (5), and the dedicated engine (3) are disposed at a back side thereof in such a way that the rotation axes (8A, 10A) thereof are oriented in the longitudinal direction of the vehicle, and the ventilation direction with respect to the condenser (23) is set to the longitudinal direction of the vehicle;
wherein the condenser fan (13), the electric motor (5) and the dedicated engine (3) are disposed on the same rotation axis, and a centrifugal clutch (11) is provided between the output shaft of the dedicated engine (3) and the motor shaft (6) of the electric motor (5), wherein the apparatus further
comprises an alternator (9) disposed at the back side of the frame (2), and **characterized in that** a drive belt (17) is installed between a pulley (12) for the centrifugal clutch and pulleys (15, 16) that are respectively provided on the rotation shafts of the refrigerant compressor (7) and the alternator (9), and **in that** an integrating bracket (18) is provided around the output shaft of the dedicated engine (3), the electric motor (5) is attached on the output shaft side of the integrated bracket (18), and the refrigerant compressor (7) and the alternator (9) are attached to the outer periphery of the integrating bracket and around the electric motor.

2. The transport refrigeration apparatus (1) according to claim 1, **characterized in that** the refrigerant compressor (7) and the alternator (9) are disposed above the electric motor (5).

3. The transport refrigeration apparatus (1) according to claim 1 or 2, **characterized in that** the dedicated engine (3), the electric motor (5), the refrigerant compressor (7), and the alternator (9) are integrated by the integrating bracket (18), and these are supported on the frame (2) at a plurality of locations so as to be isolated from vibration.

4. The transport refrigeration apparatus (1) according to any one of claims 1 to 3, **characterized in that** the accumulator (21) is arranged below the refrigerant compressor (7).

## Patentansprüche

1. Transportkühlanlage (1), wobei ein zugeordneter Motor (3), der die Kühlanlage antreibt, ein Elektromotor (5), der durch eine externe Stromquelle angetrieben ist, ein Kühlmittelverdichter (7) und ein Kondensatorgebläse (13), die durch den zugeordneten Motor oder den Elektromotor angetrieben sind, und kondensationsseitige Geräte, wie etwa ein Kondensator (23) und ein Akkumulator (21), die zum Ausbilden eines Kühlkreislaufs zusammenwirken, an einem Gestell (2) eingerichtet sind und das Gestell entlang der Längsrichtung des Fahrzeugs auf einer Seite des Kühlfahrzeugs eingerichtet ist, wobei
der Kondensator (23) auf einer Seite des Gestells (2) in der Längsrichtung des Fahrzeugs angeordnet ist, das Kondensatorgebläse (13), der Kühlmittelverdichter (7), der Elektromotor (5) und der zugeordnete Motor (3) derart auf einer Rückseite davon angeordnet sind, daß die Drehachsen (8A, 10A) davon in der Längsrichtung des Fahrzeugs ausgerichtet sind, und die Lüftungsrichtung bezüglich des Kondensators (23) auf die Längsrichtung des Fahrzeugs eingestellt ist;
wobei das Kondensatorgebläse (13), der Elektromotor (5) und der zugeordnete Motor (3) auf derselben Drehachse angeordnet sind und eine Fliehkraftkupplung (11) zwischen der Abtriebswelle des zugeordneten Motors (3) und der Antriebswelle (6) des Elektromotors (5) vorgesehen ist, wobei die Anlage ferner einen Wechselstromgenerator (9) umfaßt, der auf der Rückseite des Gestells (2) angeordnet ist, und **dadurch gekennzeichnet ist, daß** ein Treibriemen (17) zwischen einer Riemenscheibe (12) für die Fliehkraftkupplung und Riemenscheiben (15, 16) eingerichtet ist, die auf den Drehwellen des Kühlmittelverdichters (7) bzw. des Wechselstromgenerators (9) vorgesehen sind, und daß ein Integrierbügel (18) um die Abtriebswelle des zugeordneten Motors (3) vorgesehen ist, der Elektromotor (5) auf der Abtriebswellenseite des Integrierbügels (18) angebracht ist und der Kühlmittelverdichter (7) und der Wechselstromgenerator (9) am Außenumfang des Integrierbügels und um den Elektromotor angebracht sind.

2. Transportkühlanlage (1) nach Anspruch 1, **dadurch gekennzeichnet, daß** der Kühlmittelverdichter (7) und der Wechselstromgenerator (9) über dem Elektromotor (5) angeordnet sind.

3. Transportkühlanlage (1) nach Anspruch 1 oder 2, **dadurch gekennzeichnet, daß** der zugeordnete Motor (3), der Elektromotor (5), der Kühlmittelverdichter (7) und der Wechselstromgenerator (9) durch den Integrierbügel (18) integriert sind und diese derart an dem Gestell (2) an mehreren Stellen gestützt sind, daß sie schwingungsisoliert sind.

4. Transportkühlanlage (1) nach einem der Ansprüche 1 bis 3, **dadurch gekennzeichnet, daß** der Akkumulator (21) unter dem Kühlmittelverdichter (7) angeordnet ist.

## Revendications

1. Appareil de réfrigération de transport (1), dans lequel un moteur thermique dédié (3) qui entraîne l'appareil de réfrigération, un moteur électrique (5) qui est entraîné par une source d'alimentation externe, un compresseur de réfrigérant (7), et un ventilateur de condenseur (13) qui sont entraînés par l'un ou l'autre du moteur thermique dédié et du moteur électrique, et des dispositifs du côté condenseur tels qu'un condenseur (23) et un accumulateur (21) qui coopèrent afin de former un cycle de réfrigération, sont installés sur un châssis (2), et le châssis est installé le long de la direction longitudinale du véhicule sur un côté d'un véhicule réfrigéré, dans lequel
le condenseur (23) est disposé sur un côté d'extrémité du châssis (2) dans la direction longitudinale du véhicule, le ventilateur de condenseur (13), le compresseur de réfrigérant (7), le moteur électrique (5), et le moteur thermique dédié (3) sont disposés sur un côté arrière de celui-ci d'une manière telle que les axes de rotation (8A, 10A) de ceux-ci sont orientés dans la direction longitudinale du véhicule, et la direction de ventilation par rapport au condenseur (23) est établie à la direction longitudinale du véhicule ;
dans lequel le ventilateur de condenseur (13), le moteur électrique (5) et le moteur thermique dédié (3) sont disposés sur le même axe de rotation, et un embrayage centrifuge (11) est prévu entre l'arbre de sortie du moteur thermique dédié (3) et l'arbre de moteur (6) du moteur électrique (5), dans lequel l'appareil comporte en outre un alternateur (9) disposé au niveau du côté arrière du châssis (2), et **caractérisé en ce qu'**une courroie d'entraînement (17) est installée entre une poulie (12) pour l'embrayage centrifuge et des poulies (15, 16) qui sont prévues de manière respectivement sur les arbres de rotation du compresseur de réfrigérant (7) et de l'alternateur (9), et **en ce qu'**un support d'intégration (18) est prévu autour de l'arbre de sortie du moteur thermique dédié (3), le moteur électrique (5) est fixé sur le côté d'arbre de sortie du support intégré (18), et le compresseur de réfrigérant (7) et l'alternateur (9) sont fixés sur la périphérie extérieure du support d'intégration et autour du moteur électrique.

2. Appareil de réfrigération de transport (1) selon la revendication 1, **caractérisé en ce que** le compresseur de réfrigérant (7) et l'alternateur (9) sont disposés au-dessus du moteur électrique (5).

3. Appareil de réfrigération de transport (1) selon la revendication 1 ou 2, **caractérisé en ce que** le moteur thermique dédié (3), le moteur électrique (5), le compresseur de réfrigérant (7), et l'alternateur (9) sont intégrés par le support d'intégration (18), et ceux-ci sont supportés sur le châssis (2) dans une pluralité d'emplacements de façon à être isolés des vibrations.

4. Appareil de réfrigération de transport (1) selon l'une quelconque des revendications 1 à 3, **caractérisé en ce que** l'accumulateur (21) est disposé sous le compresseur de réfrigérant (7).
